# EUROPEAN PATENT SPECIFICATION

(11) **EP 4 432 630 B1**
(45) Date of publication and mention of the grant of the patent: **26.02.2025**
(21) Application number: 23161419.9
(22) Date of filing: 13.03.2023
(51) Int. Cl.: H04L 67/131, H04L 67/51, H04L 67/562

(54) **SYSTEM FOR ENABLING COLLABORATION BETWEEN XR DEVICES**
SYSTEM ZUR ERMÖGLICHUNG DER ZUSAMMENARBEIT ZWISCHEN XR-VORRICHTUNGEN
SYSTÈME POUR PERMETTRE UNE COLLABORATION ENTRE DES DISPOSITIFS XR

(43) Date of publication of application: 18.09.2024
(73) Proprietor: Vodafone GmbH, 40549 Düsseldorf (DE)
(72) Inventor: KISHAN RAO,Vijay, 40667 Meerbusch (DE)
(74) Representative: Weisbrodt, Bernd

(56) References cited:
- US-A1- 2022 392 175
- US-B2- 10 997 558

## Description

The present solution concerns a system for enabling collaboration between pluralities of extended reality (XR) devices as defined in the appended claims.

Nowadays, XR devices such as augmented reality (AR) devices, virtual reality (VR) devices, or mixed reality (MR) devices are increasingly being used in scenarios where collaboration between two or more people in AR-, VR-, and/or MR-space - hereafter also referred to as collaboration space - is common and at most times essential. For example, US 2022/0392175 A1 relates to a virtual, augmented and extended reality system and discloses a multi-realm, computer-generated reality system that admits a plurality of participants to a session conducted in a managed multi-realm reality system, wherein each of the plurality of participants is admitted through a virtual reality context, extended reality context or an augmented reality context. Most collaborative use cases warrant that participants have similar level of affordances for a successful collaboration. However the collaborating parties may have devices with disparate capabilities, features and/or affordances. The difference in capabilities respectively hardware capabilities will increase over time as devices with new and powerful capabilities are used in parallel with other devices that are older, in the same collaborative scenarios. Therefore, a solution is required, which levels the playing field, especially by enhancing the features of low-end devices in a collaboration space.

According to the present invention this is achieved by using capabilities of other devices of participants that are present in the collaboration space. The solution according to the present invention allows for example a device with lower computing capabilities (low-end device) to outsource the computing or parts of the computing to a device with higher capabilities (high-end device) during such collaboration.

Addressing this problem the present invention suggests a system for enabling collaboration between a plurality of extended reality (XR) devices according to claim 1, the system comprising: a first XR device (XR1) having a first set of features; a second XR device (XR2) having a second set of features; and a hub device (XRH) communicatively connected to the first XR device (XR1) and second XR device (XR2).

Preferred embodiments are defined in the dependent claims.

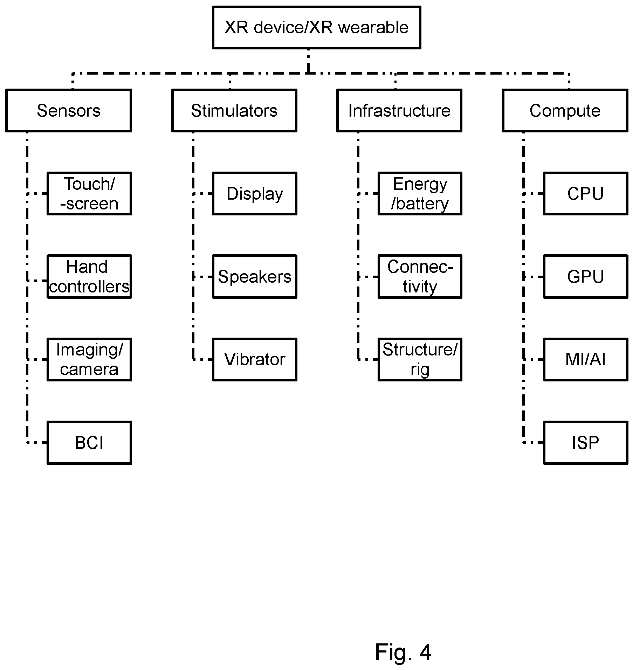

An XR device according to the present invention is any device that actively participates in a XR context without necessarily being worn on the body of a person/user. This could be sensor stuck on the wall or a landscape or a drone mapping the topography. A set of such devices which might be body worn is defined in the sense of the present invention a XR wearable. An XR wearable is a subset of the XR device category. XR wearables comprise a collection of sensors and stimulators that deliver the XR experience to the end user. A XR wearable typically has the components shown in the table of Fig. 4.

An XR wearable could be a single device that is worn on the head like a head-mounted-display (HMD) assisted by hand-held controllers or a collection of devices that are worn on the body. For example, an XR wearable could be an integrated HMD or a combination of XR glasses and sensors that might not be co-located in the space physical structure/housing as the glasses. Example of off-board sensors could come in the form of sensors that monitor the muscle movement of fingers, where the sensor-patch/device is worn as a glove or a wristband/watch. Another example of an off-board sensor could be a BCI (Brain computer interface) worn on the head or even a separate depth camera placed at a distance from the body. In essence, an XR device could be considered as a disparate set of electronic components with the intention of collecting input and/or delivering stimuli to user or participating in the XR experience by supporting other components. The components themselves may not be housed in a single physical container.

A hub device (XRH) according to the present invention - hereafter also referred as Hyperreality-Hub - advantageously enables one or more XR-devices to collaborate. Advantageously this solution can be embodiment in the form of a bespoke device or implemented as an interface in an existing XR wearable/device.

The hub device (XRH) according to the present invention advantageously allows:
1. Distributed computation across participating XR devices; advantageously each participating XR device advertises its capabilities and headroom to the other XR devices either directly (via an instance of the hub device (XRH) interface) or via a physical instance of the hub device (XRH) that it is already connected to. The least capable XR device can advantageously now participate in the XR experience making use of the compute capabilities of the others XR devices around it. A participating XR device can refresh it capabilities and announce it to the quorum, for example when an XR device must lower its computing power due to low energy or thermals;
2. Collaborative feature enhancement. The main case envisaged is that most XR-wearable's and XR-devices offloading compute to a bespoke physical instance of the hub device (XRH); advantageously when multiple XR devices are participating in a single experience, some XR devices could have their features enhanced by making use of the features that are on other XR devices in the same experience; for example, a user using a tablet device which is incapable of hand-tracking can according to the present invention participate in the XR experience with hand-tracking if other XR devices lend themselves to offer hand-tracking for the user using the tablet device; this is advantageously done by the hub device (XRH) by combining sensor data from other hand-tracking capable devices which might the hands of the user using the tablet device in view; that sensory stream will advantageously enable the user to see his/her/their hands although their own device might be incapable of hand-tracking; a participating XR device can advantageously refresh its capabilities and announce it to the quorum, for example an HMD might detect that the energy in the controllers is depleted and may no longer be used;
3. Realtime communication channels between XR-devices and hub device (XRH); advantageously an instance of the hub device (XRH) when connected to an XR device will be capable of initiating a real-time communication and/or control protocol, like ROS (Robot Operating System), ExpressLRS and/or the like, to enable real-time sensor and stimulators communication apart from control, telemetry, position, orientation, capabilities negotiation, announcements and/or the like;
4. Collab SLAM (simultaneous Location and Mapping) for spatial position and orientation of XR-devices; advantageously a collaborative point cloud generation is given, which might be static and/or dynamic; advantageously, when more than one XR device is present in the same physical space are connected to the hub device (XRH), the typical challenges of XR occlusion can be resolved by combining sensor input from all the connected XR devices to form point-cloud using available algorithms like RANSAC (RandomSampleConsensus) and ICP (Iterative closest point); advantageously with enough participation this point cloud could be made dynamic point cloud thus creating a digital twin of the real world for the virtual objects to interact with dynamically; the more XR devices join the collaborative process, the better the fidelity and resolution of the dynamic point cloud of the real-world;
5. Persistent anchor location and orientation; advantageously the hub device (XRH) has access to the volumetric data of the physical space it is in (preferably inclusive not exclusive); anchors placed by one user/entity could advantageously be made persistent so that the same is now available to other users who visit the physical space at a different time. For example, a doctor may place an anchor pertaining to the medication needs of a patient. A nurse on his/her round can now access the anchor and administer the said medicine. In the same example, the anchor could also display the vital statistics of the patient. Another example would be a museum where digital anchors are placed on/near the exhibits and patrons can now access it as they walk past the exhibits. The anchors could contain a wealth of information, media and/or associated information that would otherwise need larger physical space to display. In yet another example, a sorting robot could place anchors on the incoming shipment overnight for humans to refer to in a warehouse scenario. Some anchors like direction markers will also need to maintain their orientation along with their location, which the hub device (XRH) can advantageously provide given the volumetric data it has access to;
6. Collaborative occlusion computation; advantageously the hub device (XRH) has in a multiuser/entity scenario, the capability of dynamically generating and/or updating the volumetric data. This facilitates the hub device (XRH) to know where the objects lie in space at a given time. This information can advantageously be used to compute occlusion using existing algorithms like ray tracing which advantageously helps hidden object points to be discovered, which improves efficiency. Depending on the frequency of updating, which is either based on the use case or user configuration, the hub device (XRH) could further increase the efficiency of occlusion calculation using the differential dynamic volumetric data;
7. Collaboration between plurality of XRH instances, advantageously the real-time protocol could employ a physical cable or other wireless interfaces such as Wi-Fi; the hub device (XRH) advantageously could in turn be connected to other hub devices (XRH) either via a physical cable, for example optical, copper/metal/Ethernet, or via wireless interface such as Wi-Fi in various configurations comprising for not limited to daisy-chains, star, Mesh, circular and/or the like; variants of the hub device (XRH) could advantageously also allow a flexible platform for expansion via hardware updates or software updates; for example, a version of the hub device (XRH) could offer empty slots for future expansion via adding compute-cards to support more pairs of XR devices based on need;
8. Collaborative (static and dynamic) point cloud generation; point cloud generation could be a time-consuming for a single XR device, especially when the area to be covered is large; compromises on the resolution and/or quality are usually made in such scenarios. Advantageously there exists processes like collaborative SLAM which enables the generation of a point-cloud by combining the volumetric data from multiple sources simultaneously. Advantageously the hub device (XRH) not only enables a collaborative SLAM approach but a collaborative dynamic SLAM where the data from various XR devices that are collaboratively connected to the hub device (XRH) are updating the volumetric data continuously or periodically or a trigger. For example a participating XR device notifies the hub device (XRH) for movement detection; and/or
9. Object tracking, anchor movement and anchor tagging. Advantageously the dynamic point cloud generation enables the hub device (XRH) to be time domain independent and to have the volumetric data and its associated properties stay current, track objects, movements and/or changes associated with each volumetric unit. For example, in case of a point could that volumetric unit would be a point. Advantageously this feature can be used to generate floating anchors (virtual) that can be tagged/pinned to physical objects. In other words, the position of the anchor is now determined by the position of the object that it is tagged to, rather than the position that the anchor was originally placed in space. As per the previous example of a hospital, if an anchor is tagged to a patient with details of medication required, and if the patient is moved to another bed or location, the anchor follows the patient. In another example, an anchor could be tagged to an item at a super market, when the item is moved, the anchor moves along with the item, thanks to the object tracking and floating anchors.

According to the present invention the XR devices (XR1, XR2) that connect to the hub device (XRH) advantageously undergo an initial phase of initialization and registration before beginning regular operation.

The initialization advantageously consists an XR device (XR1, XR2) first powering itself on under user's behest.

According to a preferred embodiment of the present invention the first XR device (XR1) is configured to provide a first set of features, comprising capabilities, features and/or affordances of the first XR device (XR1), to the hub device (XRH) and/or directly to the second XR device (XR2). Advantageously by means of this, data can be communicated among clients, i.e. first XR device (XR1) and second XR device (XR2), through a publisher/subscriber-model (as an example) via the hub device (XRH) that advantageously may act as a central hub to establish the communication among clients, i.e. first XR device (XR1) and second XR device (XR2). According to a further embodiment of the present invention the hub device (XRH) advantageously also maintains the status of each client, i.e. first XR device (XR1) and second XR device (XR2), and updates the others in the cohort accordingly. These statuses may advantageously include but not limited to registered but out of range devices, device energy states, device privacy states, device registered but in various states of sleep states and/or the like. Sleep states are advantageously provided to conserve energy which includes but not limited to stepping the XR device into deeper and deeper states of sleep as time passes by or per user configuration. Sleep states advantageously ranges from reduction in operating frequency to gradually proceeding to complete shutdown of components like the CPU, GPU, memory, sensors and/or stimulators.

Sleep state sleep-0 can advantageously trigger the dimming of the display, shutting the sensors off, reducing the frequency of the CPU, GPU and/or memory. Sleep state Sleep-1 can advantageously trigger further reduction of the frequency in CPU, GPU, memory, communications chipsets and/or reduction in the brightness of the display. Sleep state Sleep-2 can advantageously trigger the "hibernate" which entails shutting various parts of the CPU, saving the volatile data if any, shutting down most components and/or readying the system to hibernate. Sleep state Sleep-3 can advantageously complete shutdown of the XR device.

According to a preferred embodiment of the present invention the registration procedure is advantageously facilitated by Near Field Communication (NFC), wherein the user taps the XR device (i.e. XR1 or XR2) on the hub device (XRH). The registration advantageously allows the hub device (XRH) to identify the disparity of features, especially when multiple devices register, and to identify the spatial location of the XR device (i.e. XR1 or XR2).

Optionally or additionally the registration process between an XR device (i.e. XR1 or XR2) and the hub device (XRH) could be accomplished by other means of communication, including optical or wired exchange of information, WiFi, Bluetooth and/or RF protocols that enable the exchange of information.

According to a further embodiment of the present invention a XR device (i.e. XR1 or XR2) that has already initialized and registered with the hub device (XRH) and has gone into sleep mode, for example as part of energy saving features, advantageously re-initializes itself by sensing the physical movement of the XR device (i.e. XR1 or XR2) itself or the re-initialization of the XR device (i.e. XR1 or XR2) be triggered by onboard sensors of the XR device (i.e. XR1 or XR2) or the re-initialization of the XR device (i.e. XR1 or XR2) be triggered by a predetermined signal/message from the hub device (XRH). According to a further embodiment of the present invention a re-registration albeit not necessarily, could advantageously be triggered by the hub device (XRH), preferably depending on various factors like for example time elapsed since last activity, activity churn over time and/or the like.

According to a further preferred embodiment, an XR device (i.e. XR1 or XR2) that gets registered with the hub device (XRH) is requested to conduct a mapping of the physical environment and submit the same to the hub device (XRH). The hub device (XRH) then builds a volumetric representation of the physical surroundings, for example as a point cloud, in which it operates and tracks the registered XR devices. A point cloud or point cloud map in the sense of the present invention is a discrete set of data points in space, wherein each point position has its set of coordinates, i.e. Cartesian coordinates (x, y, z). The points may represent i.e. a 3D shape or object. A point cloud is a well-defined term in the XR field. Advantageously, each of these points in turn may have their own set of properties which could include parameters like colour, luminosity, transparency and/or the like. The points could also have associative and/or reactive functions associated with them, for example, behaviour based on neighbouring points, reaction to interaction etc. Hence, when more than one XR device is present in a same physical space, e.g. a room, connected to hub device (XRH), challenges of XR occlusion for example can advantageously be resolved by combining sensor input from all XR devices (i.e. XR1 or XR2) connected to the hub device (XRH) to form respectively create a point cloud respectively point cloud map by the hub device (XRH). For this the hub device (XRH) advantageously makes use of algorithms like RANSAC (RandomSampleConsensus) and ICP (Iterative closest point). With enough participation of XR devices, which includes participation of a third XR device (XR3), a fourth XR device (XR4) and/or more XR devices (XRn), this point cloud may advantageously be made a dynamic point cloud, and thus allows advantageously creating a digital twin of the real world for virtual objects to interact with. The more XR devices (i.e. XR1, XR2, to XRn) join such collaborative process with the hub device (XRH) the better is the fidelity and resolution of such dynamic point cloud of the real world.

Advantageously a virtual space is anchored in a physical space using inside-out (marker-less/with markers) or Outside-In trackers to determine the physical coordinates of an XR device, preferably via or under use of SLAM. When multiple XR devices are used in the same physical space to access the same virtual space, there is no guarantee that
a) the individual XR devices, especially in the case of marker-less inside-out systems, will advantageously latch onto the same markers as the other XR devices;
b) XR devices advantageously are aware of the relative position and orientation, the direction in which the XR device is oriented, of other XR devices sharing the same physical space;
c) spatial anchors generated by an XR device won't advantageously drift over time, as explained with the following examples:
   1. Spaceship revolving around the astronauts who are using the XR device inside or during a spacewalk where the spacecraft/ship might not offer enough coverage for anchoring;
   2. Underwater exploration using XR devices where visual markers might be scarce, as in underwater oilrig training/maintenance;
   3. Outdoor situations where visual markers are scattered and scarce, for example with a military training in a desert environment;
d) XR devices advantageously can create and detect anchors in a low-contrast or low light spaces/environment;
e) XR devices advantageously can create and detect anchors in a dynamic spaces/environment like a busy conference room, tradeshows, open-air gathering and/or the like;
f) XR devices advantageously can create and detect anchors in a repetitive/identical spaces/environment, preferably visually or otherwise; for example most conference rooms in an office building might follow the same dimension and decor;
g) XR devices advantageously can minimise occlusion when there are many other people wearing XR devices in the same physical space, for example, a classroom full of students, concert, trade-show or any gathering of people.

The same advantageously applies when multiple XR devices are used in a disparate physical space to access the same virtual space, or the several XR devices are used in the same physical space to access disparate virtual space/s.

A further embodiment of the present invention provides optionally, that any additional XR devices that registers itself to the hub device (XRH) is requested to also conduct a mapping exercise, for example if the present mapping information is found inadequate in terms of completeness and/or resolution. This advantageously allows the hub device (XRH) to add to the point cloud map information, for example either to fill in the gaps, update or to increase the density or resolution of the existing point cloud map stored in the hub device (XRH).

A further embodiment of the present invention provides optionally, that the point cloud map is represented and stored as polygons or voxels or a combination thereof. Preferably the hub device (XRH) optionally provides affordances to the user of an XR device to store in an either/or/and model for the point cloud maps. Each of these representations of the surrounding spatial features offers an advantage/compromise depending on the nature of the surrounding, available storage space and/or computational requirements. In the either/or/and model, the hub device (XRH) advantageously decides where to store the maps and/or associated date, preferably either in a local storage within the confines of the physical environment or in a cloud storage space. The decision is advantageously pre-configured, user defined, dynamic or AI-generated (AI: Artificial Intelligence). The decision as to where the generated maps are stored depends on various factors which includes but not limited to the nature of the application, latency requirements, security requirements, Privacy requirements, asset management, digital license and/or the like.

Advantageously the hub device (XRH) acts as a feature transmission medium between the XR devices (i.e. XR1, XR2, to XRn) joining the collaborative process with the hub device (XRH), e.g. as a world origin for an environment scanned by a capable XR device (i.e. XR1). A first XR device (XR1), which for example may represent a high-end device having for example higher hardware capabilities, taps the hub device (XRH), registers itself to/with the hub device (XRH) and scans the environment. A second XR device (XR2), which for example may represent a low-end device having for example lower hardware capabilities, may also register itself to/with the hub device (XRH) but is restricted by its hardware, for example its camera, LIDAR (Light Imaging, Detection And Ranging) or the like, to a lower quality mapping. As the hub device (XRH) acts as the origin of the point cloud map, it advantageously transfers the higher quality point cloud map obtained from/with the first XR device (XR1) to the second XR device (XR2) and thus advantageously enhances the feature set of the second XR device (XR2), also it has lower hardware capabilities, for example with regard to its camera, LIDAR or the like.

In a further embodiment of the present invention the hub device (XRH) is advantageously configured to receive location related information from the first XR device (XR1) to create a point cloud map including positions of the first XR device (XR1) and the second XR device (XR2). This is advantageous since e.g. a low-end device, i.e. the second XR device (XR2) which may not have location and/or mapping functionality built-in, that might require certain capabilities in a collaboration space then can communicate with the hub device (XRH) to get the location related information from the hub device (XHR), especially including the positions of the first XR device (XR1) and the second XR device (XR2) in the point cloud map. If, for example, the second XR device (XR2) wants to present to an user of the second XR device (XR2) some object(s) at a particular spatial location, it can query the hub device (XRH) with a currently captured image as input. In response to this query the hub device (XRH) will localize the second XR device (XR2) based on a point cloud map stored and transmits the queried features (image) to the second XR device (XR2). Thus advantageously collaboration and distribution is given. The stored point cloud map of the hub device (XHR) happens to be a higher quality point cloud map as it was created by sensor input from the first XR device (XR1). Optionally or additionally the hub device (XRH) can store point cloud maps in a central repository or off the physical confines of the hub device (XRH) itself, but in a place where it has access to and can recall the data when needed.

According to a further preferred embodiment, the hub device (XRH) is therefore further configured to: receive, from the second XR device (XR2), an image or image stream captured by the second XR device (XR2); determine, based on the image or image stream, a position of the second XR device (XR2); and provide, to the second XR device (XR2), the determined position. Accordingly, the second XR device (XR2) can now determine its location without having a corresponding functionality on its own. In case there are more than one high-end XR devices (i.e. like the first XR device (XR1)), all of such XR devices might provide obtained point cloud map data to the hub device (XRH), which creates a global point cloud map using the same. The hub device may use various SLAM algorithms, such as ARKit, ARCore, Orb SLAM 3 or the like.

In a further preferred embodiment of the present invention optionally or additionally LIDAR, SONAR, TOF and/or other mechanisms and/or sensors can advantageously be used as an alternate and/or in conjunction with images or image streams for localization and/or mapping.

In a further preferred embodiment of the present invention, in case the first XR device (XR1) and the second XR device (XR2) have similar capabilities, features and/or affordances, the mapping data obtained from the second XR device (XR2) is used to update and or enhance the point cloud map in terms of accuracy, density and/or filling gaps that an earlier mapping might have missed. Advantageously the map data could be enhanced by combining the data generated by the first XR device (XR1) and the second XR device (XR2), advantageously by using implementations such as, OctoMap (Hornung, A., Wurm, K.M., Bennewitz, M. et al. OctoMap: an efficient probabilistic 3D mapping framework based on octrees. Auton Robot 34, 189-206 (2013)).

Advantageously, if there are temporal differences between the maps generated by the first XR device (XR1) and the second XR device (XR2), the difference in data is used to locate and identify objects that have moved. If the frequency is suitably increased to match the application, a dynamic volumetric map with dynamic object movement mapping and prediction is achieved. The implementations of trajectory prediction, well known in the computer vision industry, is advantageously further used, preferably Kernel-based tracking and/or Contour tracking.

In a further preferred embodiment of the present invention, in case the first XR device (XR1) and the second XR device (XR2) have disparate sensing capabilities, the mapping data obtained from the second XR device (XR2) is used to update and/or enhance the point cloud map in terms of accuracy, density and/or filling gaps that an earlier mapping might have missed. This is advantageously implemented with the widely available multi-sensor SLaM (Simultaneous Localization and Mapping) procedures and/or algorithms. Multi-Senor SLaM advantageously entails combining the output of various sensors like LIDAR, IR, UV, visual spectrum cameras, touch based sensors and/or the like, to generate a spatial map with higher fidelity and resolution than could be generated by the use of a single sensor. This can advantageously be implemented with existing well known multi-sensor SLaM algorithms like LIDAR-IMU based Loosely and tightly Coupled Systems.

In a further preferred embodiment of the present invention, in case the first XR device (XR1) is a high-end device with higher features and capabilities and the second XR device (XR2) is a low-end device with less features and capabilities if the second XR device (XR2) doesn't have a hand-tracking feature, the hub device (XRH) can bestow the feature to the second XR device (XR2) as long as the hands of the user of the second XR device (XR2) is in the view of first XR device (XR1). This is advantageously enabled by the hub device (XRH), by processing the sensor data from the first XR device (XR1), locating the hands of the user using the second XR device (XR2) and bringing the hand tracking feature to the second XR device (XR2). Thus the system according to the present invention advantageously enabling a hand-tracking feature for the second XR device (XR2) that hitherto was incapable of the same due to hardware limitations.

A further embodiment of the present invention is characterized in that the hub device (XRH) is configured to receive sensor data from the first XR device (XR1) to provide the at least one feature defined in the first set of features to the second XR device (XR2).

Advantageously, increased quality and/or performance are achieved by combining multiple sensor data from all connected XR devices. This ensures that tracking can be done for users who may not be in the tracking range of one XR device, but in range to the other participating XR devices, thus collaboratively compensating for occlusion.

A further advantageous embodiment of the present invention provides that the sensor data from only few XR devices can be selected for processing depending on the capabilities, computing power requirements, energy optimization, range, user configuration, application need and/or the like.

In another preferred embodiment of the present invention the hub device (XRH) itself may also have a sensor or an array of sensors to track the change of state in its physical environment and in its operational vicinity/range and extend various features to all the XR devices that are registered with it. This advantageously comprises: the aforementioned user pose, user facial movements, hand-tracking, user body movements, XR devices movements, change in state of light, sound, VOCs, heat, moisture, gaseous composition & content, and/or RF (RF: Radio Frequency) in its operation vicinity/range.

According to a preferred embodiment, when the second XR device (XR2) registers to the hub device (XRH) it will be informed about the set of features - that is not present in or with the second XR device (XR2) itself - that it can opt to enable.

In a further embodiment of the present invention some features that are nonexistent in both XR devices (first XR device (XR1) and second XR device (XR2)) can advantageously be enabled by the system, especially via the hub device (XRH).

A preferred application as such feature enhancement is facial expression tracking where as long as the user's face is in range or view of one of the participating XR devices. Thus enabling hitherto features not available in any participating XR devices by collaboration. All movement related features can thus be tracked by participating XR devices. This allows bringing features like real time expression tracking without extra sensors in individual XR devices.

A further preferred application as such feature enhancements are body movement, pose, gesture, movement of other people, movement of objects, movement of other XR devices participating in the same physical space and connected to the hub device (XRH), movement of other XR devices that are participating in the same physical space but not attached/connected to the same hub device (XRH). Essentially any movement and/or change that can be captured by another XR device, including light, sound, VOCs, heat, moisture, gaseous composition and/or content, and/or Radio frequency (WiFi, Bluetooth etc.).

According to another advantageous embodiment of the present invention, the first XR device can provide the functions and features of the device hub (XRH). Thus advantageously all of the features of the device hub XRH are implemented in the first XR device (XR1). Advantageously the first XR device (XR1) in addition to being part of the system according to the present invention as an XR device (i.e. XR1) also acts as device hub (XRH). A further embodiment of the present invention suggests that a reduced set of features of the device hub (XRH) is implemented in the first XR device (XR1). Thus enabling a limited set of features and advantages of the system according to the present invention.

According to a preferred aspect of the present invention, it is provided, that the first XR device (XR1) and the second XR device (XR2) are located in a same environment, e.g. a physical and virtual space. This is particularly advantageous since physical projections into digital world, irrespective of VR/MR or AR, would be identical apart from the perspective.

According to another embodiment of the present invention, it is provided, that irrespective of the first XR device (XR1) and the second XR device (XR2) are engaged in disparate extended realities (AR/VR/MR), the system is still able to provide the above mentioned features and advantages as long as the first XR device (XR1) and the second XR device (XR2) inhibit the same physical space, to enable sensors from one XR device to monitor the required movements/changes in the other XR device. These features include bestowing one or more of the following pose tracking, eye tracking, face tracking, hand tracking, movement tracking etc..

In another embodiment, when several XR devices are used in a same physical space to access disparate virtual spaces, there is no guarantee that the individual XR devices will latch onto same markers or anchors as other XR devices or that XR devices are aware of the relative position and orientation of other XR devices sharing a same physical space. In this case the device hub (XRH) facilities XR devices sharing the same physical space to have a common spatial reference/point cloud map in which they can operate in, irrespective of the XR devices engaged in different virtual spaces.

According to another preferred embodiment of the present invention the spatial map of the physical space is dynamically refreshed to accommodate changes in physical space which is now advantageously available for reflection/projection in the respective virtual spaces of the participating XR devices. As an example, if an assumption is made that the first XR device (XR1) and the second XR device (XR2) are head mounted devices (HMD) operating in the same physical space but the users are engaged in a different virtual spaces, and the user of the first XR device (XR1) moves a new physical object into the physical space that both, the first XR device (XR1) and the second XR device (XR2), are operating in. That new physical object needs to be reflected/projected, preferably in a form that is suitable for the experience that the user of the second XR device (XR2) is immersed in the experience of the second XR device (XR2) as well, so that the second XR device (XR2) is aware of it. This reduces the risk of users of XR devices unintentionally interacting with physical objects that dynamically present themselves in the physical environment. These physical objects could be other users of XR devices as well.

Advantageously, the hub device (XRH) is configured to provide a real-time communication channel towards the first XR device (XR1) and/or the second XR device (XR2). For example, an instance of the hub device (when connected to an XR device) might be capable of initiating a real-time communication and/or control protocol (like ROS, ExpressLRS, etc.) to enable real-time sensor and stimulator communication apart from control, telemetry, position, orientation, capabilities negotiation, announcements and/or the like.

According to another preferred embodiment, the first XR device (XR1) and/or the second XR device (XR2) is communicatively connected to the hub device (XRH) by at least one of: a wireless connection including Wi-Fi, Bluetooth, and/or NFC; and a wired connection including optical fibers, metal, and Ethernet. For example, the real-time protocol could employ a physical cable or a wireless interface such as Wi-Fi. Moreover, the hub device (XRH) could in turn be connected to other hub devices (XRH) either via a physical cable or via wireless interface in various topology configurations, including but not limited to daisy-chains, star, mesh, circular and/or the like.

Variants of the hub device (XRH) could advantageously also allow a flexible platform for expansion via hardware updates or software updates. For example, a version of the hub device (XRH) could offer empty slots for future expansion via adding compute-cards to support additional XR devices based on demand.

According to a further aspect of the present invention, the second XR device (XR2) is configured to provide a second set of features and the first XR (XR1) device is configured to use at least one of the features defined in the second set of features. This has the advantage that, in case both XR devices are high-end devices but have different specific features; said features can be made available for both XR devices involved. Accordingly, the hub device (XRH) can be used for a mutual exchange of features among the first XR device (XR1) and the second XR device (XR2).

Advantageously, the second XR device (XR2) is configured to provide the second set of features to the hub device (XRH) and/or directly to the first XR device (XR1).

This allows the first XR device (XR1) and the second XR device (XR2) to mutually subscribe to features of the respective other.

Preferably, the first XR device (XR1) and/or the second XR device (XR2) are a wearable device. A wearable device in sense of the present invention may be a single device that is worn on the head like a head-mounted-display (HMD) assisted by hand-held controllers or a collection of multiple devices that are worn on the body. For example, a wearable could be an integrated HMD or a combination of XR glasses and sensors that might not be co-located in the space physical structure/housing as the glasses. Example of such off-board sensors could come in the form of sensors that monitor the muscle movement of fingers, where the sensor-patch/device is worn as a glove, held in the hand/s or a wristband/watch. Another example of an off-board sensor could be a Brain Computer Interface (BCI) worn on the head or even a separate depth camera placed at a distance from the body. Hence, such XR device could be considered as a disparate set of electronic components with the intention of collecting input and delivering stimuli to an end user, wherein the components themselves may not be housed in a single physical container.

According to a further embodiment of the present invention, the first XR device (XR1) and/or the second XR device (XR2) are: an augmented reality (AR) device, a virtual reality (VR) device, or a mixed reality (MR) device.

According to a further embodiment, the XR devices that can connect to device hub (XRH) are not limited to human wear-able devices. The devices could advantageously be as simple as web-cams, drones, house-hold appliances or industrial appliances, sensors, monitors, intelligent structures, medical equipment and/or the like. In essence it is provided, that any physical object that needs to be represented in the XR world is considered an XR device.

Preferably, the hub device (XRH) comprises a compute section, a communication section, and a platform section. The compute section consists advantageously of computational elements like the GCPU (General CPU (Central Processing Unit)), GPU, AI (Artificial Intelligence), and ML (Machine Learning) components integrated together to offer a XR platform for serving many different pairs of XR devices and other non-body-worn-devices (typically off-board sensors). The communication section of the hub device (XRH) can be broadly divided into back-end and front-end. The back-end communication section attempts ensures that the hub device (XRH) is connected to the internet, as the need may be, via various means, for example Cellular based station via 5G, connection to satellites, another hub via Ethernet/optical and/or the like. The back-end communication section is advantageously also responsible for connecting to other hub devices (XRH) via various technologies, for example 5G, Ethernet, Wi-Fi and/or the like. The front-end communication section connects to all the XR devices and other related hardware that are needed to deliver the XR experience. The platform section advantageously consists of mechanisms for controlling and managing several functions, preferably:
- Creation of computation models either virtual or the digital equivalent of physical objects which are spatially collocated in the physical realm; Data to create computational models of the physical objects could advantageously come from the XR devices that are connected to hub device (XRH);
- Ensuring synchronisation between back-end and front-end communication as per the use case;
- Ensuring latency requirements of the XR devices;
- provide an abstraction layer for applications to be developed and deployed (ex., an operating system).

Further details, features and/or advantages of the presented invention are explained in more detail below with reference to the embodiments of the present invention shown in the figures of the drawings.

Therein:
- Fig. 1: represents a flow chart showing an embodiment of an interworking in a system comprising a first XR device (XR1), a second XR device (XR2) and a hub device (XRH);
- Fig. 2: represents a block diagram showing an embodiment utilizing a global SLAM located on the hub device (XRH);
- Fig. 3: represents a flow chart showing an embodiment of an initial phase of initialization and registration of a XR device with a hub device (XRH) according to the present invention; and
- Fig. 4: shows a table with components an XR device according to the present invention, especially a XR wearables, comprise.

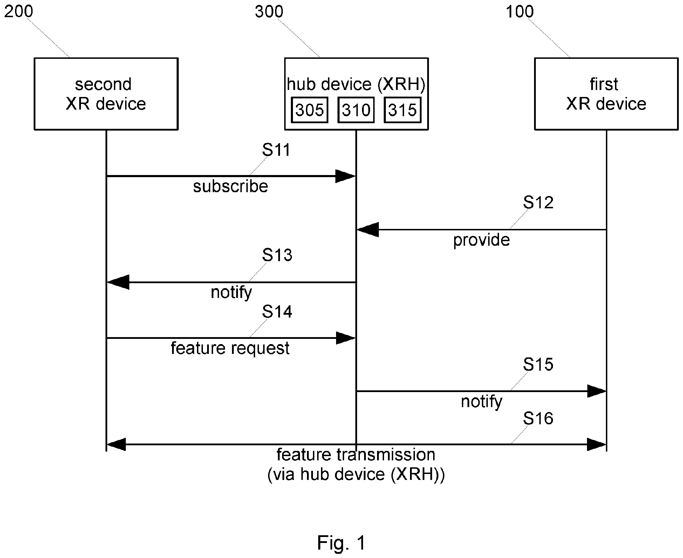

Fig. 1 shows an embodiment of an interworking in a system comprising a first XR device 100, a second XR device 200, and a hub device 300. In a first step S11, the second XR device 200, e.g. a low end device, may subscribe to the hub device 300 in order to be informed about a first set of features that may be provided to the hub device 300 by the first XR device 100.

When the first XR device 100, e.g. a high end device, has provided its features to the hub device 300 in step S12, the hub device 300 subsequently notifies - due to the preceding subscription - the second XR device 200 about the same. As an alternative, it can be foreseen that the first XR device 100 directly informs the second XR device 200 about available features.

According to an embodiment, particularly if there are more than two devices, each participating XR device may advertise its capabilities and headroom to the other XR devices either directly (i.e. via an instance of a hub device interface) or via a physical instance of the hub device that it is already connected to. A least capable XR device (e.g. a low end device) can now participate in an XR experience making use of the computing capabilities of the other XR devices around it.

After that, the second XR device 200 may transmit a feature request in step S14 to the hub device 300. Said request pertains to a feature, which has been previously notified to the second XR device 200, i.e. a feature that is only available on the first XR device 100 but not on the second XR device 200.

Subsequently, the hub device 300 notifies the first XR device 100 in step S15 that a feature of said device has been requested. For example, a user of the second XR device 200, which itself is incapable of performing hand-tracking, wants to participate in an XR experience with hand-tracking. For this purpose, the first XR device 100 lends itself (i.e. its corresponding feature) to offer hand-tracking for the second XR device 200. According to step S16, this is done by the hub device 300 by combining sensor data from the first XR device 100 that has the hands of the user using the second XR device in its field of view. A corresponding sensory stream, obtained by the first XR device 100, will enable the user of the second XR device 200, to see his/her hands although the user's own second XR device 200 is incapable of hand-tracking.

Therein, the hub device 300 may comprise a compute section 305, a communication section 310, and a platform section 315.

The compute section 305 may comprise a General Central Processing Unit (GCPU), a Graphics Processing Unit (GPU), an Artificial Intelligence (AI) unit, and Machine Learning (ML) components integrated together to offer a XR platform for serving many different pairs of XR devices, i.e. not only a pair of first XR device 100 and second XR device 200, and other non-body-worn devices such as off-board sensors.

The communication section 310 of the hub device 300 may be broadly divided into a backend and a frontend, wherein the backend ensures that the hub device 300 is connected to the Internet, e.g. using a cellular network such as 5G, a connection to satellites, another hub via Ethernet/optical networks, and/or the like. The backend may be also responsible for connecting to other hub device via various technologies including 5G, Ethernet, Wi-Fi and/or the like. On the contrary, the frontend connects to all the XR devices, such as the first XR device 100 and the second XR device 200, and other related hardware that are needed to deliver an XR experience.

Finally, the platform section 315 comprises software that manages several functions including the creation of computation models, wherein data to create such computation models of physical objects in the real could come from XR devices that are connected to hub device 300. Furthermore, the platform section 315 comprises software that ensures synchronization between backend and frontend communication as well as latency requirements of the XR devices, e.g. by providing an abstraction layer for applications to be developed and deployed.

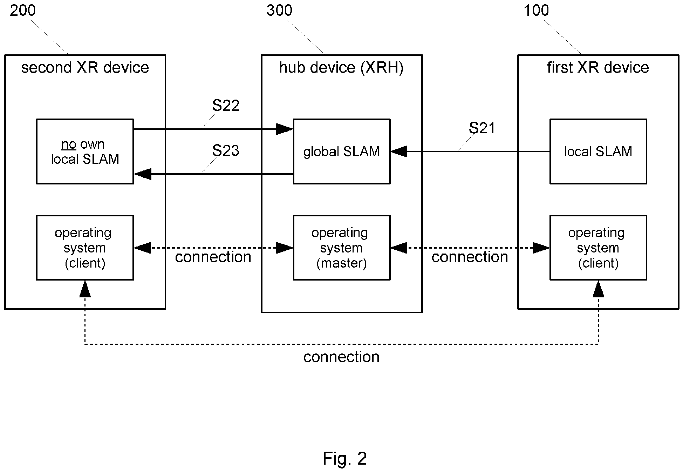

Fig. 2 shows an embodiment, wherein a global SLAM located on the hub device 300 is utilized to provide location data to a low end device, i.e. second XR device 200.

According to the embodiment of Fig. 2, a Robot Operating System (ROS) might be used as a middleware to allow communication among the hub device 300 and the AR devices 100/200. This is indicated by means of dotted lines.

Therein, the hub device 300 may act as an ROS master to establish a communication among the clients, i.e. first XR device 100 and second XR device 200. As explained above, data may be communicated among the clients using a Publisher/Subscriber model.

Moreover, it is apparent from Fig. 2 that a global Simultaneous Localization and Mapping (SLAM) is present on the hub device 300, which stores maps from all devices that are capable of providing corresponding data, i.e. the first XR device 100 (which is a high end device). Accordingly, in step S21 of Fig. 2, the first XR device 100 provides such data to the hub device 300.

When the low end device, i.e. the second XR device 200, requires corresponding capabilities, it communicates with hub device 300 to get it, which is indicated in step S22. For example, if the second XR device 200 wants to present some object at a particular world pose, it can query the hub device 300 for a global map with a current image, i.e. an image that has been captured by the second XR device 200, as input.

In response to that, the hub device 300 will localize the second XR device 200 based on the map created based on data retrieved from other devices (i.e. high end devices), such as the first XR device 100, and thereby transmits corresponding features to the second XR device 200 by means of collaboration and distribution. Hence, although the second XR device 200 does not have own SLAM capabilities, it may nevertheless determine its own location.

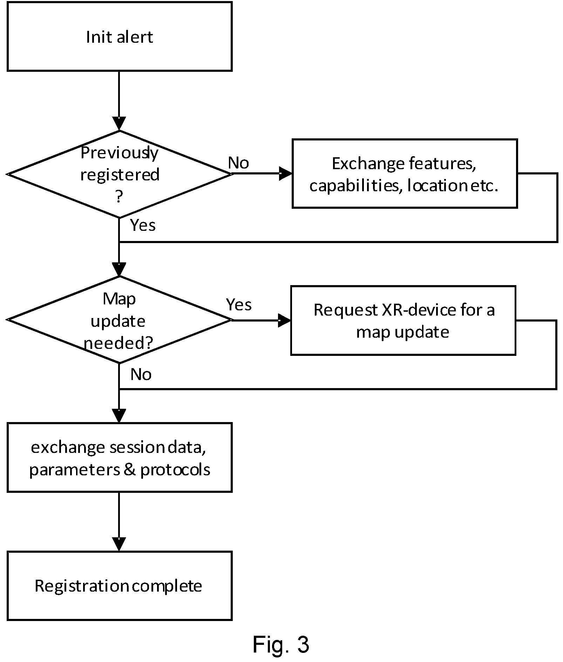

The flow chart according to Fig. 3 shows an embodiment of an initial phase of initialization and registration of a XR device with a hub device (XRH) according to the present invention. On side of a XR device the XR device taps the hub device (XRH), registers itself to/with the hub device (XRH) and scans the environment. On side of the hub device (XRH) the tapping is used as an init alert. The hub device (XRH) determines, whether the XR device was previously already registered with the hub device (XRH). If this was not the case, the hub device (XRH) queries the XR device to provide respectively exchange the first set of features, especially comprising capabilities, and location of the XR device. If the XR device was previously already registered with the hub device (XRH) the hub device (XRH) determines, whether the map/point cloud map used for collaboration needs an update. If an update of the map is deemed necessary by the software or application hosted on the hub device (XRH), the hub device (XRH) requests the registered XR devices to update the map. Typically this would be message communicated to the user of the XR1 which, for the example in this document it has been referred to as the device with higher capability XR1. The XR device with the help of the user wielding it, will then scan the surrounding and exchange the scanned data with the hub device (XRH). If no update of the map is needed or the map is already updated, the hub device (XRH) exchanges session data, parameters and protocols used within the session and completes with this the registration of the XR device to the hub device (XRH).

Fig. 4 shows a table with components an XR device according to the present invention, especially a XR wearables. These advantageously comprise a collection of sensors and stimulators that deliver the XR experience to the end user.

The embodiments shown in the figures of the drawing and the embodiments explained in connection therewith, particularly the examples of messages in Fig. 2, serve only to explain the presented solution according to the present invention and are not limiting for the same.

### Reference signs:

- 100: First XR device (XR1)
- 200: Second XR device (XR2)
- 300: Hub device (XRH)
- 305: Compute section of hub device (XRH)
- 310: Communication section of hub device (XRH)
- 315: Platform section of hub device (XRH)

- S11: Method step
- S12: Method step
- S13: Method step
- S14: Method step
- S15: Method step
- S16: Method step

- S21: Method step
- S22: Method step
- S23: Method step

## Claims

1. A system for enabling collaboration between a plurality of extended reality, XR, devices (10, 20), the system comprising:
a first XR device (100) having a first set of features;
a second XR device (200) having a second set of features; and
a hub device (300) communicatively connected to the first XR device (100) and the second XR device (200),
wherein the first XR device (100) is configured to provide the first set of features to the hub device (300),
**characterized in that**
the second XR device (200) is configured to use at least one of the features defined in the first set of features, and
wherein the second XR device (200) is configured to subscribe to the hub device (300) to be informed about the first set of features in case the first set of features is provided to the hub device (300).

2. The system of claim 1, wherein the hub device (300) is configured to receive sensor data from the first XR device (100) to provide the at least one feature defined in the first set of features to the second XR device (200).

3. The system of claim 2, wherein the first XR device (100) and the second XR device (200) are located in a same environment.

4. The system of any one of claims 1 to 3, wherein the hub device (300) is configured to receive location related information from the first XR device (100) to create a map including positions of the first XR device (100) and the second XR device (200).

5. The system of claim 4, wherein the hub device (300) is further configured to:
receive, from the second XR device (200), an image and/or image stream captured by the second XR device (200),
determine, based on the image and/or image stream, a position of the second XR device (200), and
provide, to the second XR device (200), the determined position.

6. The system of any one of claims 1 to 5, wherein the hub device (300) is configured to provide a real-time communication channel towards the first XR device (100) and/or the second XR device (200).

7. The system of any one of claims 1 to 6, wherein the first XR device (100) and/or the second XR device (200) are communicatively connected to the hub device (300) by at least one of:
a wireless connection including Wi-Fi, Bluetooth, and/or NFC; and/or
a wired connection including optical fibers, metal, and/or Ethernet.

8. The system of any one of claims 1 to 7, wherein the hub device (300) is configured to control the first XR device (100) and the second XR device (200) to collaboratively operate in a point cloud generation.

9. The system of any one of claims 1 to 8, wherein the second XR device (200) is configured to provide a second set of features and the first XR device (100) is configured to use at least one of the features defined in the second set of features.

10. The system of claim 9, wherein the second XR device (200) is configured to provide the second set of features to the hub device (300) and/or directly to the first XR device (100).

11. The system of any one of claims 1 to 10, wherein the first XR device (100) and/or the second XR device (200) are a wearable device.

12. The system of any one of claims 1 to 11, wherein the first XR device (100) and/or the second XR device (200) are:
an augmented reality, AR, device,
a virtual reality, VR, device, or
a mixed reality, MR, device.

13. The system of any one of claims 1 to 12, wherein the hub device (300) comprises a compute section (305), a communication section (310), and a platform section (315).

## Patentansprüche

1. System zur Ermöglichung der Zusammenarbeit zwischen einer Vielzahl von Vorrichtungen (10, 20) der erweiterten Realität (XR), wobei das System folgendes umfasst:
eine erste XR-Vorrichtung (100) mit einem ersten Satz von Merkmalen;
eine zweite XR-Vorrichtung (200) mit einem zweiten Satz von Merkmalen; und
eine Hub-Vorrichtung (300), die kommunikativ mit der ersten XR-Vorrichtung (100) und der zweiten XR-Vorrichtung (200) verbunden ist,
wobei die erste XR-Vorrichtung (100) so konfiguriert ist, dass sie den ersten Satz von Merkmalen an die Hub-Vorrichtung (300) bereitstellt,
**dadurch gekennzeichnet, dass**
die zweite XR-Vorrichtung (200) so konfiguriert ist, dass sie mindestens eines der im ersten Satz von Merkmalen definierten Merkmale verwendet, und
die zweite XR-Vorrichtung (200) so konfiguriert ist, dass sie sich bei der Hub-Vorrichtung (300) anmeldet, um über den ersten Satz von Merkmalen informiert zu werden, wenn der erste Satz von Merkmalen der Hub-Vorrichtung (300) bereitgestellt ist.

2. System nach Anspruch 1, wobei die Hub-Vorrichtung (300) so konfiguriert ist, dass sie Sensordaten von der ersten XR-Vorrichtung (100) empfängt, um das wenigstens eine im ersten Satz von Merkmalen definierte Merkmal der zweiten XR-Vorrichtung (200) bereitzustellen.

3. System nach Anspruch 2, wobei sich die erste XR-Vorrichtung (100) und die zweite XR-Vorrichtung (200) in derselben Umgebung befinden.

4. System nach einem der Ansprüche 1 bis 3, wobei die Hub-Vorrichtung (300) konfiguriert ist standortbezogene Informationen von der ersten XR-Vorrichtung (100) zu empfangen, um eine Karte zu erstellen, die Positionen der ersten XR-Vorrichtung (100) und der zweiten XR-Vorrichtung (200) beinhaltet.

5. System nach Anspruch 4, wobei die Hub-Vorrichtung (300) ferner konfiguriert ist:
von der zweiten XR-Vorrichtung (200) ein Bild und/oder einen Bildstrom zu empfangen, der von der zweiten XR-Vorrichtung (200) erfasst wurde,
auf der Grundlage des Bildes und/oder des Bildstroms eine Position der zweiten XR-Vorrichtung (200) zu bestimmen, und
der zweiten XR-Vorrichtung (200) die ermittelte Position bereitzustellen.

6. System nach einem der Ansprüche 1 bis 5, wobei die Hub-Vorrichtung (300) konfiguriert ist einen Echtzeit-Kommunikationskanal zu der ersten XR-Vorrichtung (100) und/oder der zweiten XR-Vorrichtung (200) bereitzustellen.

7. System nach einem der Ansprüche 1 bis 6, wobei die erste XR-Vorrichtung (100) und/oder die zweite XR-Vorrichtung (200) kommunikativ mit der Hub-Vorrichtung (300) verbunden sind durch mindestens eins der folgenden:
eine drahtlose Verbindung beinhaltend Wi-Fi, Bluetooth und/oder NFC; und/oder
eine kabelgebundene Verbindung beinhaltend Glasfasern, Metall und/oder Ethernet.

8. System nach einem der Ansprüche 1 bis 7, wobei die Hub-Vorrichtung (300) konfiguriert ist die erste XR-Vorrichtung (100) und die zweite XR-Vorrichtung (200) so zu steuern, dass diese bei einer Punktwolkenerzeugung zusammenarbeiten.

9. System nach einem der Ansprüche 1 bis 8, wobei die zweite XR-Vorrichtung (200) konfiguriert ist einen zweiten Satz von Merkmalen bereitzustellen, und die erste XR-Vorrichtung (100) konfiguriert ist mindestens eines der im zweiten Satz von Merkmalen definierten Merkmale zu verwenden.

10. System nach Anspruch 9, wobei die zweite XR-Vorrichtung (200) konfiguriert ist den zweiten Satz von Merkmalen an die Hub-Vorrichtung (300) und/oder direkt an die erste XR-Vorrichtung (100) bereitzustellen.

11. System nach einem der Ansprüche 1 bis 10, wobei die erste XR-Vorrichtung (100) und/oder die zweite XR-Vorrichtung (200) eine tragbare Vorrichtung ist.

12. System nach einem der Ansprüche 1 bis 11, wobei die erste XR-Vorrichtung (100) und/oder die zweite XR-Vorrichtung (200)
eine Augmented-Reality-Vorrichtung, AR-Vorrichtung,
eine Virtual-Reality-Vorrichtung, VR-Vorrichtung, oder
eine Mixed-Reality-Vorrichtung, MR-Vorrichtung,
ist.

13. System nach einem der Ansprüche 1 bis 12, wobei die Hub-Vorrichtung (300) eine Rechensektion (305), eine Kommunikationssektion (310) und eine Plattformsektion (315) umfasst.

## Revendications

1. Système permettant la collaboration entre plusieurs dispositifs de réalité étendue (10, 20), le système comprenant:
un premier dispositif XR (100) doté d'un premier ensemble de caractéristiques;
un deuxième dispositif XR (200) doté d'un deuxième ensemble de caractéristiques; et
un dispositif concentrateur (300) connecté de manière communicative au premier dispositif XR (100) et au deuxième dispositif XR (200),
le premier dispositif XR (100) est configuré pour fournir le premier ensemble de caractéristiques au dispositif concentrateur (300),
**caractérisé par le fait que**
dans lequel le deuxième dispositif XR (200) est configuré pour utiliser au moins l'une des caractéristiques définies dans le premier ensemble de caractéristiques, et
dans lequel le deuxième dispositif XR (200) est configuré pour s'abonner au dispositif concentrateur (300) afin d'être informé de la première série de caractéristiques dans le cas où la première série de caractéristiques est fournie au dispositif concentrateur (300).

2. Le système de la revendication 1, dans lequel le dispositif concentrateur (300) est configuré pour recevoir des données de capteur du premier dispositif XR (100) afin de fournir au deuxième dispositif XR (200) au moins une caractéristique définie dans le premier ensemble de caractéristiques.

3. Le système de la revendication 2, dans lequel le premier dispositif XR (100) et le deuxième dispositif XR (200) sont situés dans le même environnement.

4. Le système de l'une des revendications 1 à 3, dans lequel le dispositif concentrateur (300) est configuré pour recevoir des informations de localisation du premier dispositif XR (100) afin de créer une carte comprenant les positions du premier dispositif XR (100) et du deuxième dispositif XR (200)

5. Le système de la revendication 4, dans lequel le dispositif concentrateur (300) est en outre configuré pour
recevoir, du deuxième dispositif XR (200), une image et/ou un flux d'images capturées par le deuxième dispositif XR (200),
déterminer, sur la base de l'image et/ou du flux d'images, une position du deuxième dispositif XR (200), et
fournir au deuxième dispositif XR (200) la position déterminée.

6. Le système de l'une des revendications 1 à 5, dans lequel le dispositif concentrateur (300) est configuré pour fournir un canal de communication en temps réel vers le premier dispositif XR (100) et/ou le deuxième dispositif XR (200).

7. Le système de l'une des revendications 1 à 6, dans lequel le premier dispositif XR (100) et/ou le deuxième dispositif XR (200) sont connectés de manière communicative au dispositif concentrateur (300) par au moins l'un des éléments suivants:
une connexion sans fil, y compris Wi-Fi, Bluetooth et/ou NFC; et/ou
une connexion câblée comprenant des fibres optiques, du métal et/ou Ethernet.

8. Le système de l'une des revendications 1 à 7, dans lequel le dispositif central (300) est configuré pour contrôler le premier dispositif XR (100) et le deuxième dispositif XR (200) afin qu'ils collaborent à la génération d'un nuage de points.

9. Le système de l'une des revendications 1 à 8, dans lequel le deuxième dispositif XR (200) est configuré pour fournir un deuxième ensemble de fonctionnalités et le premier dispositif XR (100) est configuré pour utiliser au moins une des fonctionnalités définies dans le deuxième ensemble de fonctionnalités.

10. Le système de la revendication 9, dans lequel le deuxième dispositif XR (200) est configuré pour fournir le deuxième ensemble de caractéristiques au dispositif concentrateur (300) et/ou directement au premier dispositif XR (100).

11. Le système de l'une des revendications 1 à 10, dans lequel le premier dispositif XR (100) et/ou le deuxième dispositif XR (200) sont des dispositifs portables.

12. Le système de l'une des revendications 1 à 11, dans lequel le premier dispositif XR (100) et/ou le deuxième dispositif XR (200) sont
un dispositif de réalité augmentée (RA),
un dispositif de réalité virtuelle (RV), ou
un appareil de réalité mixte (MR).

13. Le système de l'une des revendications 1 à 12, dans lequel le dispositif central (300) comprend une section de calcul (305), une section de communication (310) et une section de plate-forme (315).
